(19) Europäisches Patentamt

European Patent Office

Office européen des brevets

(11) **EP 1 030 214 A2**

(12) **EUROPÄISCHE PATENTANMELDUNG**

(43) Veröffentlichungstag:
 23.08.2000 Patentblatt 2000/34

(51) Int. Cl.[7]: **G03B 27/72**

(21) Anmeldenummer: 00100242.7

(22) Anmeldetag: 18.01.2000

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(30) Priorität: **29.01.1999 EP 99101595**

(71) Anmelder:
 **GRETAG IMAGING Trading AG
 5430 Wettingen (CH)**

(72) Erfinder:
 • **Kraft, Walter
  8049 Zürich (CH)**
 • **Nussbaumer, Max
  5454 Bellikon (CH)**

(74) Vertreter:
 **Schwabe - Sandmair - Marx
 Stuntzstrasse 16
 81677 München (DE)**

(54) **Verfahren zum Optimieren der Beleuchtungsverteilung in einem photographischen Kopiergerät**

(57) Verfahren zum Optimieren eines Kopierlichtprofils bei der Kopie fotografischer Vorlagen in einem fotografischen Kopiergerät, wobei das Kopiergerät zumindest Folgendes umfasst: ein Leuchtmittel (404) zum Abgeben von Kopierlicht für den Kopiervorgang, eine Anzahl von optischen, lichtführenden Mitteln (404, 406, 110, 111, 112, 118, 120, 122, 130, 140, 142, 151, 30) zum Führen des Kopierlichts entlang eines Strahlengangs vom Leuchtmittel über die fotografische Vorlage (200) zu einem Kopiermaterial (42) sowie zum Durchleuchten der fotografischen Vorlage und zum Abbilden der durchleuchteten fotografischen Vorlage (200) auf das lichtempfindliche Kopiermaterial, und einen lokalen Transmissionsmodulator (20), durch den das Kopierlicht mittels der lichtführenden Mittel geführt wird, bevor es das Kopiermaterial belichtet, dessen Transmission lokal zum Erzeugen eines Transmissionsprofils steuerbar ist , und dessen Transmissionsprofil für den Kopiervorgang in Abhängigkeit von der zu kopierenden fotografischen Vorlage vorgegeben ist, wobei das Verfahren folgende Schrille umfasst:

a) zur Messung eines Profils der Kopierlichtintensität wird entweder ein transparentes Element bekannten Transmissionsprofils oder kein transparentes Element im Strahlengang zur Durchleuchtung vorgesehen, wobei sich keine zu kopierende fotografische Vorlage unbekannten Transmissionsprofils im Strahlengang befindet, weiter wird ein für die Messung spezifisches Transmissionsprofil für den lokalen Transmissionsmodulator vorgegeben,
b) das sich auf Grund des Schrittes a) ergebende Kopierlicht wird flächig aufgelöst gemessen, das Profil des Kopierlichts wird bestimmt und mit einem angestrebten Kopierlichtprofil verglichen,

c) zum Kopieren fotografischer Vorlagen auf Kopiermaterial wird basierend auf dem Vergleich im Schritt b) das für den jeweiligen Kopiervorgang vorgegebene Transmissionsprofil optimiert.

Fig. 1a

**Beschreibung**

Die vorliegende Erfindung betrifft ein Verfahren zum Optimieren eines Kopierlichtprofils eines fotografischen Kopiergeräts nach dem Oberbegriff des Anspruches 1 sowie ein fotografisches Kopiergerät nach dem Oberbegriff des Anspruches 11. Insbesondere betrifft die vorliegende Anmeldung die Optimierung des Kopierlichtprofils in Kopiergeräten, die einen lokalen Transmissionsmodulator, wie z.B. eine Flüssigkristallmatrix, aufweisen. Weiter betrifft die Erfindung die Verwendung eines derartigen lokalen Transmissionsmodulators in einem fotografischen Kopiergerät gemäß Anspruch 13, um die Optimierung zu erzielen.

Kopiergeräte zum Kopieren fotografischer Vorlagen, insbesondere transparenter Vorlagen, wie z.B. Filme (Positivfilme, Negativfilme), sind z.B. aus DE 43 08 864, DE 40 40 498 oder DE 197 03 063 bekannt. Die dort beschriebenen Kopiergeräte verwenden eine LC-Matrix (Flüssigkristallmatrix), um das Profil des Kopierlichts für den Belichtungsvorgang zu beeinflussen. Die LC-Matrix dient dazu, gewisse Bereiche der Abbildung aufzuhellen oder abzudunkeln, um so die Abbildung einer fotografischen Vorlage in einer gewünschten Art und Weise zu manipulieren. Die hierzu verwendete Maske, gemäß der eine LC-Matrix angesteuert wird, wird von der fotografischen Vorlage abgeleitet und ist somit von deren jeweiligen Bilddaten abhängig.

Die Erfinder der vorliegenden Anmeldung haben erkannt, dass ein lokaler Transmissionsmodulator, wie z.B. eine LC-Matrix oder eine steuerbare Streumatrix nicht nur bei einem jeweiligen Abbildungsvorgang zur Manipulation einer Abbildung in Abhängigkeit von einer gegebenen Vorlage verwendet werden kann, sondern auch zur generellen Verbesserung der Kopiereigenschaften eines bestimmten Kopiergeräts, und zwar unabhängig von der gerade zu kopierenden Vorlage.

In einem Kopiergerät werden optische Komponenten, wie hochwertige Leuchtmittel und optische, lichtführende Mittel, wie z.B. Spiegel, Ellipsoidspiegel, Linsen, Blenden, Filter, Lichtmischer, Verschlüsse usw., verwendet, um ein möglichst glattes Profil des Kopierlichts (d.h. der Kopierlichtintensität oder der Kopierlichtdichte) zu erzielen, das möglichst frei von Schwankungen ist, um so die Vorlage möglicht optimal auszuleuchten.

In der Praxis ist es jedoch so, dass das erzielte Kopierlichtprofil nicht optimal ist. Dies kann z.B. durch ein nicht optimales Zusammenwirken der lichtführenden Mittel oder durch ungewünschte Änderungen des Kopierlichts durch die lichtführenden Mittel verursacht sein. So können z.B. Ringstrukturen entstehen.

Aufgabe der Erfindung ist es, ein Verfahren und eine Vorrichtung bereitzustellen, durch die das Kopierlichtprofil in einem Kopiergerät optimiert werden kann. Weiter wird erfindungsgemäß ein lokaler Transmissionsmodulator zu dieser Optimierung verwendet.

Vorstehende Aufgabe wird durch die Gegenstände der Ansprüche 1, 11 und 13 gelöst. Vorteilhafte Weiterbildungen gehen aus den Unteransprüchen hervor.

Vorteilhaft ist durch die Verwendung eines in einem Kopiergerät bereits vorhandenen lokalen Transmissionsmodulators eine kostengünstige Optimierung des Kopierlichtprofils möglich. Der aufwendige Optimierungsprozess zur Abstimmung der optischen Komponenten kann vereinfacht werden. Weiter wird die Möglichkeit eröffnet, kostengünstigere optische Komponenten mit größeren Herstellungstoleranzen zu verwenden, da dadurch bedingte Inhomogenitäten des Kopierlichtprofils nach dem erfindungsgemäßen Verfahren ausgeglichen werden können.

Das erfindungsgemäße Verfahren wird in einem fotografischen Kopiergerät eingesetzt, wie es z.B. in der europäischen Patentanmeldung Nr. 99 101 595.9 beschrieben ist, deren Offenbarung hiermit in die Anmeldung mit aufgenommen wird. Ein derartiges Kopiergerät verwendet mindestens ein Leuchtmittel, wie z.B. eine Halogenlampe oder LED-Dioden, zum Erzeugen des Kopierlichtes. Das erzeugte Kopierlicht wird in dem Kopiergerät über eine Anzahl optischer, lichtführender Mittel, wie z.B. Blenden, Linsen, Spiegel, teildurchlässige Spiegel, Strahlteiler, Objektive, Streuelemente (Diffusoren), Prismen, usw., entlang eines Strahlenganges (optische Achse) über die fotografische Vorlage bis zum Kopiermaterial geführt. Das Licht wird vorzugsweise durch homogenisierende Mittel, wie z.B. Streuscheiben homogenisiert, bevor es zu der fotografischen Vorlage gelangt. Die fotografische Vorlage ist transparent und es kann sich z.B. um einen Negativfilm oder Positivfilm handeln. Bei dem Kopiermaterial handelt es sich z.B. um Fotopapier. Die fotografische Vorlage wird durchleuchtet und die durchleuchtete Vorlage wird auf das Kopiermaterial abgebildet.

Das Kopierlichtprofil wird dann als optimal angesehen, wenn es eine gewünschte Form annimmt. Vorzugsweise soll das Kopierlichtprofil (in der Abbildungsebene) so gestaltet sein, dass die Abbildung einer fotografischen Vorlage eine homogene (z. B. homogen graue) Kopie ergibt, wenn die fotografische Vorlage auf der fotografischen Erfassung (z.B. mittels einer Kamera) eines homogenen (z. B. homogen grauen) Bildes beruht. Wäre die fotografische Erfassung perfekt, so wäre somit auch die fotografische Vorlage homogen und man würde sich somit ein homogenes Kopierlichtprofil wünschen. Die Aufnahmeobjektive von Kameras bewirken jedoch einen Abfall der Beleuchtungsstärke vom Zentrum zum Rand. Vorzugsweise wird deshalb ein Kopierlichtprofil dann als optimal angesehen, wenn es diesen Abfall wenigstens zum Teil ausgleicht und nicht nur mögliche, durch die lichtführenden Mittel veranlisste Störungen des Kopierlichts mindert. Ein homogenes, durch eine Kamera erfasstes Bild wird somit durch eine zumindest annähernd homogene Kopie wiedergegeben.

Der lokaler Transmissionsmodulator ist in einem fotografischen Kopiergerät vorzugsweise in der Nähe der Vorlage entweder davor oder danach angeordnet. Das Kopierlicht wird durch den lokalen Transmissionsmodulator hindurchgeführt. Der lokale Transmissionsmodulator kann seine Transmission ändern, wobei er hierzu vorzugsweise elektrisch angesteuert wird. Die Änderung der Transmission erfolgt flächenmäßig aufgelöst (lokal), das heißt an verschiedenen Stellen (Elementen des Transmissionsmodulators) können unterschiedliche Transmissionen eingestellt werden. Wie bereits im Zusammenhang mit dem Stand der Technik beschrieben wurde, wird für die Kopie einer fotografischen Vorlage am lokalen Transmissionsmodulator ein bestimmtes Transmissionsprofil in Abhängigkeit von den Bilddaten der Vorlage eingestellt, um das Helligkeitsprofil der Abbildung zu manipulieren. Dieses Transmissionsprofil wird im folgenden als für den Kopiervorgang vorgegebenes Transmissionsprofil bezeichnet. Ist keine Manipulation der Abbildung vorgesehen, so wird nach dem Stand der Technik ein gleichmäßiges Transmissionsprofil vorgegeben. Dies war bei dem Stand der Technik z.B. dann der Fall, wenn die fotografische Vorlage auf einem homogenen Bild beruhte.

Nach dem erfindungsgemäßen Verfahren wird das für den Kopiervorgang vorgegebene Transmissionsprofil des lokaler Transmissionsmodulators in Abhängigkeit von einem gegebenen (Ist-) und gewünschten (Soll-) Kopierlichtprofils geändert. Das Kopierlichtprofil kann z.B. als Profil einer Kopierlichtintensität oder einer optischen Dichte des Kopierlichtes oder der Beleuchtungsstärke des Kopierlichtes oder einer Funktion dieser Größen beschrieben werden. Das Transmissionsprofil wird z.B. bei der Abbildung einer Vorlage, die ein homogenes Bild darstellen soll, auf ein Kopiermaterial derartig geändert, dass Inhomogenitäten in der Abbildung beseitigt oder zumindest gemindert werden.

Um das Transmissionsprofil derartig abändern zu können, dass das Kopierlichtprofil optimiert wird, sind mehrere Schritte erforderlich. Zuerst muss das in einem Kopiergerät gegebene Kopierlichtprofil vermessen werden. Dieses Kopierlichtprofil hängt von den verwendeten optischen Komponenten (Leuchtmittel; lichtführende Mittel; lichtstreuende Mittel, wie LC-Matrix, Streuscheibe; lichtabsorbierende Mittel, wie Filter oder auch LC-Matrix) ab und kann je nach Typ des Kopiergeräts oder sogar von Kopiergerät zu Kopiergerät bei gleichem Typ variieren. Das Kopierlichtprofil beschreibt flächenmäßig aufgelöst die Stärke des Kopierlichtes quer zum Strahlengang in der Abbildungsebene (z. B. ausgedrückt durch Intensität oder optische Dichte). Um dieses zu vermessen, sind im Wesentlichen zwei Schritte erforderlich. In einem ersten Schritt wird eine definierte Messumgebung zur Messung des Kopierlichtprofils geschaffen. Hierzu wird vorzugsweise anstatt irgendeiner beliebigen fotografischen Vorlage vorzugsweise ein transparentes Element mit einem bekannten Transmissionsprofil in den Strahlengang eingebracht. Hierbei kann es sich z.B. um einen Testfilter handeln, dessen spektrale Durchlässigkeit an das Spektrum einer durchschnittlichen Vorlage angepasst ist. Vorzugsweise wird das transparente Element zwischen Vorlage und Abbildungsebene, besonders vorzugsweise in der Nähe des Abbildungsobjektivs z. B. in der Blendenebene des dort befindlichen Abbildungsobjektivs oder direkt unterhalb des Abbildungsobjektivs platziert. Weniger bevorzugt kann das transparente Element auch an der Stelle platziert werden, wo sich beim normalen Kopierbetrieb (aber nicht bei der Messung des Kopierlichtprofils) die fotografische Vorlage befindet oder in der Nähe dieser Stelle. Bei dem transparenten Element kann es sich um eine in geeigneter Weise belichtete fotografische Vorlage handeln, die insbesondere ein glattes oder homogenes Transmissionsprofil aufweist. Auch kann es sich um eine fotografische Vorlage handeln, die durch fotografische Erfassung eines homogen graues Bild erstellt wurde und den typischen Randabfall der Transmission aufweist, wie es bei Aufnahmen mit einer typischen Kamera auftritt. In diesem Fall ist dann das in der Abbildungsebene angestrebte Sollprofil homogen. Das angestrebte Kopierlichtprofil (Sollprofil) ist vorzugsweise unabhängig von dem Bildinhalt der zu kopierenden fotografischen Vorlagen.

Auch kann es sich bei dem transparenten Element z.B. um einen Graufilter handeln. Alternativ hierzu kann auch kein transparentes Element oder ein völlig transparentes Element in dem Strahlengang vorgesehen werden. In diesem alternativen Fall wird vorzugsweise nur eine sehr kurze Messzeit zur Messung des Kopierlichtprofils gewählt.

Zur weiteren Festlegung der Meßumgebung wird vorzugsweise, vor dem Optimierungsvorgang ein insbesondere für die Messung spezifisches Transmissionsprofil für den lokaler Transmissionsmodulator vorgeben. Die Transmissionscharakteristiken in Abhängigkeit von den Steuergrößen (Steuerspannungen) sind für jedes Transmissionselement des lokalen Transmissionsmodulators bekannt. Das für die Messung spezifische Transmissionsprofil ist vorzugsweise glatt oder homogen.

Ist, wie oben beschrieben, eine definierte Messumgebung zur Messung des Kopierlichtprofils geschaffen, wobei sich im Gegensatz zum Kopiervorgang keine fotografische Vorlage (unbekannter Transmission) im Strahlengang des Kopiergeräts befindet, so wird in einem nächsten Schritt das Kopierlicht zur Bestimmung des Kopierlichtprofils gemessen. Diese Messung erfolgt vorzugsweise, nachdem das Kopierlicht das transparente Element passiert hat oder nach der letzten optischen Komponente (z.B. dem letzten lichtführenden Mittel). Besonders bevorzugt wird das Kopierlichtprofil in der Abbildungsebene oder in der Nähe der Abbildungsebene gemessen. Hierzu kann z.B. ein herkömmliches Kopiermaterial (Fotopapier) in der Abbildungsebene festgelegt werden und das belichtete Kopiermaterial dann nach Helligkeitsschwankungen untersucht werden, wobei die Gradation des Kopiermaterials berücksichtigt wird. Hierzu kann das belichtete Kopiermaterial z.B. von einem Scanner oder Densitometer mit vorzugsweise kalibrierter Graustufenskala abgetastet werden, um so das mit dem Kopiermaterial (Fotopapier) gemessene Kopierlichtprofil zu digitalisieren. Alternativ können auch andere flächenmäßig aufgelöste Lichtdetektionsmittel, wie z.B. ein Diodenarray zur Vermessung des Kopierlichtprofils verwendet werden. Ein derartiger Detektor zur Messung des Kopierlichtprofils kann z.B. in der Abbildungsebene oder deren Nähe angeordnet werden, so dass er den normalen Kopierbetrieb nicht stört (z.B. einschwenkbar) oder die Abbildungsebene kann für diesen Messvorgang mittels einer Abbildungsoptik oder mittels eines Spiegels auf einen Kopierlichtdetektor abgebildet werden.

Ist auf die oben beschriebene Art und Weise das Kopierlichtprofil bestimmt und insbesondere digitalisiert, so kann basierend auf dem bestimmten Profil (z.B. Intensitätsprofil, Profil der optischen Dichte) das Transmissionsprofil des lokalen Transmissionsmodulators geändert werden. Wurde z.B. festgestellt, dass gewisse Bereiche im Kopierlichtprofil in ungewünschter weise heller sind als die übrigen Bereiche, so wird das Transmissionsprofil des lokalen Transmissionsmodulators derartig lokal abgesenkt, dass diese hellen Bereiche auf die Helligkeit der übrigen Bereiche abgedunkelt werden. Für den Fall einer Flüssigkristallmatrix werden also die Transmissionen der diesem Bereich zugeordneten Flüssigkristallelemente in passender Weise abgesenkt. Im Falle eines Photopapiers ergeben helle Bereiche des Kopierlichtprofils dunkle Bereiche auf dem Photopapier.

Um das Kopierlichtprofil für den Kopiervorgang fotografischer Vorlagen zu optimieren, wird vorzugsweise das für den Kopiervorgang vorgegebene Transmissionsprofil so geändert, daß sich eine Kopie ergibt, die der Kopie entspricht, die mit einem Kopiergerät mit optimalen Kopierlichtprofil erzielt worden wäre. Hierzu wird vorzugsweise das für den Kopiervorgang vorgegebene Transmissionsprofil so geändert, daß man bei einer entsprechenden Änderung des für die Messung des Kopierlichtprofils verwendeten spezifischen Transmissionsprofils ein optimales Kopierlichtprofil festgestellt hätte. Die Optimierung ist derartig, daß man bei einer erneuten Bestimmung des Kopierlichtprofils feststellt, dass die Abweichung des bestimmten Kopierlichtprofils von dem angestrebten Kopierlichtprofil kleiner ist oder minimiert ist. Eine derartige erneute Bestimmung oder Messung kann durchgeführt werden, um die Optimierung zu überprüfen. Dies ist allerdings nicht unbedingt erforderlich. Auch kann durch mehrere Bestimmungs- oder Meßvorgänge und darauf basierende Änderungen des Transmissionsprofils eine iterative Annäherung an das optimale Ergebnis erzielt werden. Hierzu wird vorzugsweise der lokale Transmissionsmodulator so verfahren, dass sich eine schaffe Abbildung des Transmissionsmodulators auf die Abbildungsebene ergibt. Bei einer unscharfen Abbildung des lokalen Transmissionsmodulators auf die Abbildungsebene wird jedoch vorzugsweise von einer iterativen Annäherung abgesehen.

Um das angestrebte Kopierlichtprofil zu erzielen, wird vorzugsweise eine mathematische Beziehung zwischen dem angestrebten Kopierlichtprofil und dem (durch die Messung) bestimmten Kopierlichtprofil und/oder die Abweichung bzw. Differenz zwischen dem angestrebten und dem bestimmten Kopierlichtprofil bestimmt und basierend hierauf wird das für einen Kopiervorgang vorgegebene Transmissionsprofil des lokalen Transmissionsmodulators geändert.

Ist z.B. bei scharfer Abbildung ein Bereich (Element) i des lokalen Transmissionsmodulators auf Grund der gegebenen optischen Abbildungsgeometrien einem Bereich i' in der Abbildungsebene zugeordnet und hat der lokale Transmissionsmodulator in dem Bereich (Element) i eine spezifische Transmission $T_i$ (vor der Optimierung) und das Kopierlichtprofil wird in dem Bereich i' in der Abbildungsebene z.B. durch eine Intensität $I_i$ des Kopierlichts beschrieben. Für diesen Fall wird dann vorzugsweise die Transmission des lokaler Transmissionsmodulator $T_i$ auf eine optimale Transmission $Topt_i$ abgeändert. Bei Darstellung durch Transmissionen und Intensitäten gilt somit:

$$Topt_i = T_i \times (Isoll_{i'}/I_{i'})$$

Dabei bedeutet $I_{i'}$ die gemessene Intensität am Ort i', $Isoll_{i'}$ die Sollintensität am Ort i', $T_i$ die Transmission des Elements i des Transmissionsmodulators und $Topt_i$ die optimierte Transmission des Elements i.

Die Transmissionsmatrix des lokalen Transmissionsmodulators wird zum Kopieren einer Vorlage vorzugsweise unscharf auf die Abbildungsebene abgebildet, um keine scharfen Helligkeitskanten in der Abbildung sichtbar zu machen. Zur Messung des Kopierlichtprofils wird sie jedoch vorzugsweise scharf abgebildet. Hierzu kann der lokale Transmissionsmodulator zwischen einer „scharfen" und „unscharfen" Stellung verfahrbar gestaltet werden.

Vorzugsweise wird ein einmal gemessenes und bestimmtes Kopierlichtprofil für die Änderung des Transmissionsprofils bei einer Vielzahl von Kopiervorgängen insbesondere mit unterschiedlichen fotografischen Vorlagen verwendet.

Vorteilhaft wird das Kopierlichtprofil gemessen, nachdem das Kopierlicht zumindest die Mehrzahl der optischen Komponenten (lichtstreuende, lichtabsorbierende und lichtführende Mittel) passiert hat, um so die wesentlichen Inhomogenitäten oder Abbildungsfehler bei der Kopierlichtmessung zu erfassen. Besonders vorzugsweise erfolgt die Kopierlichtmessung nach Durchgang durch den lokalen Transmissionsmodulator. Dadurch können insbesondere durch den lokaler Transmissionsmodulator hervorgerufene Inhomogenitäten berücksichtigt werden.

Wird in einem Kopiergerät z.B. in Abhängigkeit von der Vorlage oder einem Filmtyp eine unterschiedliche spektrale Zusammensetzung des Kopierlichts (verschiedenfarbiges Kopierlicht) verwendet oder erfolgte eine sequentielle Belichtung mit unterschiedlichen Farben, so wird das Kopierlichtprofil vorzugsweise jeweils für das verwendete Kopierlicht (einer bestimmten Farbe) bestimmt und die Änderung des Transmissionsprofils des lokaler Transmissionsmodulators erfolgt in Abhängigkeit von der spektralen Zusammensetzung (Farbe) des Kopierlichtes. Wenn innerhalb eines Kopiervorganges, also der Aufbelichtung einer Vorlage auf ein Kopiermaterial, nacheinander Kopierlicht unterschiedlicher spektraler Zusammensetzung (Farbe) verwendet wird, so wird vorzugsweise das Transmissionsprofil des lokalen Transmissionsmodulators in der entsprechenden zeitlichen Abfolge in Abhängigkeit von der spektralen Zusammensetzung (Farbe) des Kopierlichts geändert, und zwar entsprechend dem für jedes Kopierlicht (einer bestimmten Farbe) gemessenen Kopierlichtprofil.

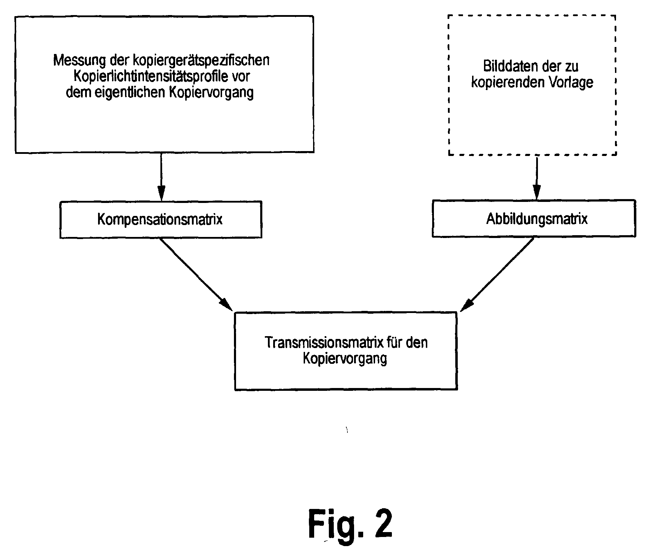

Vorzugsweise wird aus dem bestimmten Kopierlichtprofil eine Kompensationsmatrix bestimmt (siehe auch Fig. 2), die abgespeichert wird und zum Ändern des Transmissionsprofils bei jedem Kopiervorgang verwendet werden kann. Vorzugsweise erfolgt die Änderung des Transmissionsprofils basierend auf einem digitalen Rechenvorgang. Dazu wird vorzugsweise eine das Transmissionsprofil beschreibende Transmissionsmatrix basierend auf der erwähnten Kompensationsmatrix berechnet. In die Berechnung der Transmissionsmatrix fließt weiter die für den jeweiligen Kopiervorgang spezifische Abbildungsmatrix ein. Die Abbildungsmatrix wird insbesondere aus den Bilddaten der fotografischen Vorlage bestimmt, indem z.B. die fotografische Vorlage vor dem Kopiervorgang optisch abgetastet wird oder gescant wird. Beschreiben die Elemente der Abbildungsmatrix und der Kompensationsmatrix jeweils optische Dichten, so kann sich die Transmissionsmatrix z.B. einfach aus der Addition der Abbildungsmatrix und der Kompensationsmatrix ergeben.

Werden in einem Kopiergerät unterschiedliche Abbildungsobjektive entsprechend unterschiedlichen Vergrößerungen verwendet, so kann eine Kompensationsmatrix für jedes Abbildungsobjektiv abgespeichert werden und je nach verwendeten Abbildungsobjektiv dann verwendet werden. Dies ist insbesondere deshalb von Vorteil, weil unterschiedliche Objektive einen unterschiedlichen Abfall der Kopierlichtintensität vom Zentrum zum Rand bewirken. Dadurch kann für jede gewünschte Vergrößerung (Abbildungsobjektiv) ein optimales Kopierlicht erzielt werden.

In einem erfindungsgemäßen fotografischen Kopiergerät kann ein für die Messung des Kopierlichtprofils verwendetes transparentes Element, wie z.B. ein Graufilter oder eine geeignet belichtete fotografische Vorlage dauerhaft vorgesehen sein. Das transparente Element kann dann z.B. für die Messung in den Strahlengang eingebracht (z.B. eingeschwenkt) werden und wird vorzugsweise für die herkömmlichen Kopiervorgänge aus dem Strahlengang entfernt. Umgekehrt wird für die Messung des Kopierlichtprofils vorzugsweise jegliche fotografische Vorlage unbekannten Transmissionsprofils, also z.B. eine normale zu kopierende Vorlage aus dem Strahlengang entfernt. Auch kann zur Messung des Kopierlichtprofils eine Lichtmesseinrichtung, wie z.B. eine Photodiodenarray dauerhaft in dem Kopiergerät vorgesehen sein. Diese Messeinrichtung kann z.B. in der Papierbühne angeordnet sein. Vorzugsweise ist das transparente Element so montiert, dass es automatisch in den Strahlengang eingeführt werden kann, wenn eine Messung des Kopierlichtprofils durchgeführt werden soll. Auf diese Art und Weise lassen sich z.B. in gewissen Betriebszeitintervallen ungewünschte Änderungen des Kopierlichtprofils durch eine Messung feststellen und dann kompensieren. Auch kann eine Eingabevorrichtung zum Eingeben einer Kompensationsmatrix von einer Wartungsperson vorgesehen werden, die das Kopierlichtprofil vermessen hat und daraus die Kompensationsmatrix berechnet hat.

Weitere Vorteile und Merkmale der vorliegenden Erfindung ergeben sich aus der folgenden Beschreibung von Ausführungsformen. Dabei können verschiedene Merkmale unterschiedlicher Ausführungsformen miteinander kombiniert werden.

Fig. 1a zeigt den ersten Teil eines Strahlengangs in der Beleuchtungseinheit eines fotografischen Kopiergeräts.

Fig. 1b zeigt die Fortsetzung des Strahlengangs der Fig. 1a in der Abbildungseinheit des fotografischen Kopiergeräts.

Fig. 2 zeigt einen Ablauf zur Bestimmung einer Transmissionsmatrix für einen lokalen Transmissionsmodulator.

Im Folgenden bezeichnen gleiche Bezugszeichen gleiche Teile oder Einrichtungen.

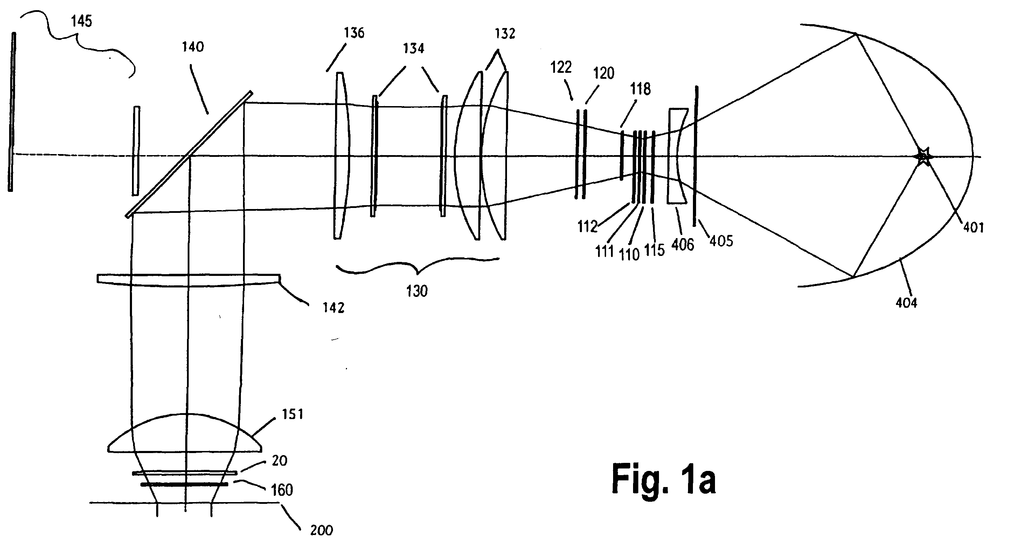

Fig. 1a zeigt eine schematische Übersicht über die Anordnung der optischen Komponenten in einem fotografischen Kopiergerät. Das von der Lampe 401 abgegebene Kopierlicht wird von dem elliptischen Reflektor 404 reflektiert und gebündelt und zu einer ersten zerstreuenden Linse 406 geführt. Vor dieser Linse ist ein Wärmeschutzfilter 405 vorgesehen, der Infrarotstrahlung nicht durchlässt. Die Bezugszeichen 110, 111 und 112 bezeichnen einklappbare Farbfilter für die Farben Magenta, Cyan und Gelb, die in den Strahlengang eingeklappt werden können, um nur Licht eines bestimmten Wellenlängenbereichs hindurchzulassen.

Weiter ist ein (Schwarz-)Verschluss 115 vorgesehen, der die Belichtung eröffnet und abschließt. In Kombination mit dem Verschluss 115 ist ein Abschwächerrad 118 vorgesehen. Dieses Abschwächerrad enthält Graufilter unterschiedlicher Transmission. In Kombination mit dem Verschluss und den Farbfiltern lässt sich somit eine gewünschte Belichtung erreichen. Insbesondere kann die Belichtungszeit in einer gewissen Spanne gehalten werden. Anschließend an das Abschwächerrad sind sogenannte Kammfilter 120 und Balancefilter 122 vorgesehen. Der Kammfilter 120 lässt Licht in drei bestimmten vorgegebenen Spektralbereichen durch. Die Spektralbereiche sind auf die spektrale Empfindlichkeit des Fotopapiers zur Erzeugung von Farben auf dem Fotopapier abgestimmt. Neben einer spektralen Anpassung des Kopierlichtes wird auch noch eine Intensitätsanpassung zum Abgleichen der Belichtungszeiten für alle drei Farben mittels des Balancefilters vorgenommen. Dieser sorgt dafür, dass jeder der drei durch den Kammfilter 120 herausgegriffenen Wellenlängenbereiche mit einer auf das Fotopapier abgestimmten Intensität auf dieses auftrifft.

130 zeigt eine Kollimatoranordnung zum Parallelisieren des Lichtes mit zwei Linsen 132, zwei Integratorplatten 134 und einer weiteren Linse 136. Die Integratorlinse wird auch als Honigwabenlinse oder als Integratorplatte bezeichnet. Im vorliegenden Fall sind zwei Integratorplatten 134 vorgesehen.

Das aus der Linse 136 austretende Belichtungslicht wird dann von einem Strahl-teiler 140 reflektiert und nach unten zu einer weiteren Linse 142 gelenkt. Von dort aus tritt das Licht dann zu der Linse 151, zu der Flüssigkristallmatrix (lokaler Transmissionsmodulator) 20 und zu der Streuscheibe 160 geführt.

Der Spiegel 140 ist teildurchlässig und ein Teil des Lichtes wird von einem Lichtmesssystem 145 erfasst. Damit wird die Beleuchtungseinheit kalibriert.

Die erwähnte Flüssigkristallmatrix 20 ist am unteren Ende des Lichtschachtes vorgesehen. Der Lichtschacht ist am unteren Ende durch eine Streuscheibe 160 abgeschlossen.

Zur Steuerung der Flüssigkristallmatrix ist eine nicht gezeigte Schnittstelle vorgesehen, die mit einer nicht gezeigten Steuereinrichtung in Verbindung steht und die die Steuersignale zur Ansteuerung der Flüssigkristallmatrix liefert.

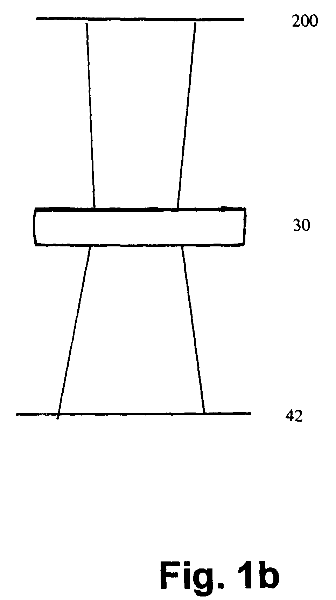

Die Flüssigkristallmatrix 20 ist so angeordnet, dass sie nur unscharf der fotografischen Vorlage (Film) 200 überlagert wird. Der Film 200 wird über ein in Fig. 1b gezeigtes Objektiv 30 auf das Fotopapier 42 abgebildet. Nach dem Abbildungsobjektiv 30 befindet sich ein zweiter Verschluß, welcher das Photopapier vor Fremdlicht schützt. An dieser Stelle kann z.B. das transparente Element (nicht gezeigt) platziert werden.

Zur Messung eines Kopierlichtprofils wird vorzugsweise ein transparentes Element mit bekannten Transmissionsprofilen, also z.B. ein homogen belichteter Film oder homogener Graufilter mit mittlerer Transmission im Strahlengang zum Beispiel an der oben erwähnten Stelle platziert. Der Film 200 wird aus dem Strahlengang entfernt. Weiter wird eine Lichtmesseinrichtung (Detektor), die das Licht flächig aufgelöst messen kann, im Strahlengang vorzugsweise am Ort des Fotopapiers 42 platziert. Als Kopierlichtmesseinrichtung kann ein Photodiodenarray oder einfach ein Fotopapier verwendet werden. Um eine definierte Messumgebung zur Bestimmung des Kopierlichtprofils zu erhalten, wird vorzugsweise die Flüssigkristallmatrix 20 so angesteuert, um ein homogenes Transmissionsprofil für die Flüssigkristallmatrix zu erzielen. Sollte das Transmissionsprofil von einem homogenen Profil abweichen, so wird dies bei der Kopierlichtprofilmessung erkannt und kann dann zusammen mit anderen Inhomogenitäten kompensiert werden. Erfolgt die Messung mittels Photopapier, so wird dessen Färbung oder Schwärzung z.B. mittels eines Densitomers oder Scanners lokal vermessen, wobei die Gradation des Papiers zur Bestimmung des Kopierlichtprofils berücksichtigt wird.

Sollte sich ein nicht linearer Zusammenhang zwischen der Ansteuerung der Transmissionsmatrix für die einzelnen Matrixelemente und dem gemessenen Kopierlicht in verschiedenen Bereichen der Abbildungsebene ergeben, so können die Kennlinien z.B. in einer Tabelle abgespeichert werden und später entsprechend berücksichtigt werden.

Das gemessene Kopierlichtprofil wird vorzugsweise digitalisiert. Für den Fall, dass das Kopierlichtprofil mit einem Fotopapier gemessen wurde, wird dieses optisch z.B. mittels eines Scanners erfasst und somit digitalisiert.

Wie in Fig. 2 beschrieben ist, findet die Messung des Kopierlichtprofils statt, bevor das Kopierlichtprofil für darauf folgende Kopiervorgänge optimiert wird. Aus dem bestimmten Kopierlichtprofil wird vorzugsweise eine Kompensationsmatrix abgeleitet, die dann abgespeichert wird. Die Kompensationsmatrix wird vorzugsweise so berechnet, dass bei einer Ansteuerung der Flüssigkristallmatrix gemäß der Kompensationsmatrix bei dem oben beschriebenen Messvorgang sich ein optimales Kopierlichtprofil in der Abbildungsebene ergeben würde bzw. wird.

Um das Vorhandensein eines optimalen Kopierlichtprofils bei den jeweiligen Kopiervorgängen einer fotografischen Vorlage zu simulieren, wird die Kompensationsmatrix (siehe Figur 2) auch beim normalen Kopierbetrieb berücksichtigt. Vorzugsweise wird beim normalen Kopierbetrieb die Flüssigkristallmatrix gemäß einer Transmissionsmatrix angesteuert, wobei die Elemente der Transmissionsmatrix den Transmissionsgrad der einzelnen Elemente der Flüssigkristallmatrix beschreiben. Für die Abbildung einer fotografischen Vorlage kann es erwünscht sein, dass das Helligkeitsprofil der Abbildung manipuliert wird, das heißt das Transmissionsprofil der Flüssigkristallmatrix soll nicht homogen sein. Diese gewünschte Manipulation wird durch eine Abbildungsmatrix beschrieben. Bei einem Kopierbetrieb nach dem Stand der Technik würde die Transmissionsmatrix mit der Abbildungsmatrix übereinstimmen. Gemäß der vorliegenden Erfindung wird aber die Transmissionsmatrix sowohl aus der Kompensationsmatrix als auch der Abbildungsmatrix berechnet. Bei der in obiger Weise bestimmten Kompensationsmatrix werden hierzu bevorzugt einfach die Kompensationsmatrix und die Abbildungsmatrix addiert, falls die Matrizen die optische Dichte beschreiben.

Die Elemente der Abbildungsmatrix werden bevorzugt aus den Bilddaten der zu kopierenden Vorlage abgeleitet. Dabei wurden die Bilddaten der zu kopierenden Vorlage vor dem Kopiervorgang durch einen optischen Abtastvorgang erfasst.

Die Berechnung der Transmissionsmatrix aus der Kompensationsmatrix und der Abbildungsmatrix kann in Abhängigkeit von den bestimmten Bilddaten der zu kopierenden Vorlage, deren Analyse oder Klassifizierung variiert werden. Dabei kann z.B. die Farbe und/oder die zu erwartende Helligkeit in einem gewissen Bereich der Abbildung mit einfließen.

Zur Berechnung der Matrizen wird vorzugsweise eine Berechnungseinheit, wie z.B. eine CPU oder ASIC verwendet. Auch kann bei herkömmlichen Kopiergeräten die Flüssigkristallmatrix (lokaler Transmissionsmodulator) zur Optimierung des Kopierlichtprofils verwendet werden. Hierzu kann das Kopiergerät z.B. mit einer zusätzlichen Berechnungseinheit versehen werden, die mit der Ansteuerung der Flüssigkristallmatrix gekoppelt wird, oder eine bereits verhandene Berechnungseinheit oder die Ansteuerung wird umprogrammiert.

**Patentansprüche**

1. Verfahren zum Optimieren eines Kopierlichtprofils bei der Kopie fotografischer Vorlagen in einem fotografischen Kopiergerät,

wobei das Kopiergerät zumindest Folgendes umfasst:

ein Leuchtmittel (404) zum Abgeben von Kopierlicht für den Kopiervorgang,
eine Anzahl von optischen, lichtführenden Mitteln (404, 406, 110, 111, 112, 118, 120, 122, 130, 140, 142, 151, 30) zum Führen des Kopierlichts entlang eines Strahlengangs vom Leuchtmittel über die fotografische Vorlage (200) zu einem Kopiermaterial (42) sowie zum Durchleuchten der fotografischen Vorlage und zum Abbilden der durchleuchteten fotografischen Vorlage (200) auf das lichtempfindliche Kopiermaterial, und
einen lokalen Transmissionsmodulator (20),

durch den das Kopierlicht mittels der lichtführenden Mittel geführt wird, bevor es das Kopiermaterial belichtet,

dessen Transmission lokal zum Erzeugen eines Transmissionsprofils steuerbar ist , und

dessen Transmissionsprofil für den Kopiervorgang in Abhängigkeit von der zu kopierenden fotografischen Vorlage vorgegeben ist,

**dadurch gekennzeichnet, dass** das Verfahren folgende Schritte umfasst:

a) zur Messung eines Profils des Kopierlichts wird entweder ein transparentes Element bekannten Transmissionsprofils oder kein transparentes Element im Strahlengang zur Durchleuchtung vorgesehen, wobei sich keine zu kopierende fotografische Vorlage unbekannten Transmissionsprofils im Strahlengang befindet, weiter wird ein für die Messung spezifisches Transmissionsprofil für den lokalen Transmissionsmodulator vorgegeben,
b) das sich auf Grund des Schrittes a) ergebende Kopierlicht wird flächig aufgelöst gemessen, das Profil des Kopierlichts wird bestimmt und mit einem angestrebten Kopierlichtprofil verglichen,
c) zum Kopieren fotografischer Vorlagen auf Kopiermaterial wird basierend auf dem Vergleich im Schritt b) das für den jeweiligen Kopiervorgang vorgegebene Transmissionsprofil optimiert.

2. Verfahren nach Anspruch 1, dadurch gekennzeichnet, dass zur Optimierung das vorgegebene Transmissionsprofil des lokalen Transmissionsmodulators so geändert wird, dass eine entsprechende Änderung des für die Messung spezifischen Transmissionsprofils im Schritt a) bei einer erneuten, nicht notwendigerweise durchzuführenden Bestimmung des Kopierlichtprofils gemäß Schritt b) eine verringerte oder minimierte Abweichung des bestimmten Kopierlichtprofils vom angestrebten Kopierlichtprofil zur Folge hätte.

3. Verfahren nach Anspruch 1 oder 2, dadurch gekennzeichnet, dass das Kopierlichtprofil gemessen wird, nachdem das Kopierlicht zumindest die Mehrzahl der lichtführenden Mittel passiert hat.

4. Verfahren nach Anspruch 1 bis 3, dadurch gekennzeichnet, dass die Messung des Kopierlichts im Schritt b) erfolgt, nachdem das Kopierlicht den lokalen Transmissionsmodulator passiert hat.

5. Verfahren nach Anspruch 1 bis 4, dadurch gekennzeichnet, dass im Schritt b) das Kopierlicht zumindest in etwa in der Ebene gemessen wird, in der Kopiermaterial für den Kopierprozess vorgesehen wird.

6. Verfahren nach Anspruch 1 bis 5, dadurch gekennzeichnet, dass als transparentes Element ein Graufilter oder eine fotografische Vorlage mit bekanntem und/oder homogenem Transmissionsprofil verwendet wird.

7. Verfahren nach Anspruch 1 bis 6, dadurch gekennzeichnet, dass das für die Messung spezifische Transmissionsprofil homogen ist.

8. Verfahren nach Anspruch 1 bis 7, dadurch gekennzeichnet, dass der lokale Transmissionsmodulator eine Vielzahl Transmissionselemente aufweist, deren Transmissionsgrad gemäß einer Transmissionsmatrix gesteuert wird, wobei die Transmissionsmatrix aus einer Kombination einer Kompensationsmatrix und einer Abbildungsmatrix berechnet wird, wobei die Abbildungsmatrix dem für den jeweiligen Kopiervorgang vorgegebenen Transmissionsprofil entspricht und die Kompensationsmatrix aus einem Vergleich des im Schritt b) gemessenen Kopierlichtprofils mit dem angestrebten Kopierlichtprofil abgeleitet wird.

9. Verfahren nach Anspruch 8 dadurch gekennzeichnet, dass die Abbildungsmatrix aus den digitalisierten, die zu kopierende fotografische Vorlage darstellenden fotografischen Bilddaten berechnet wird.

10. Verfahren nach Anspruch 1 bis 9, dadurch gekennzeichnet, dass zum Messen der Kopierlichtstärke im Schritt b) Kopiermaterial oder ein Lichtdetektor verwendet wird.

11. Fotografisches Kopiergerät mit optimiertem Kopierlichrprofil zum Kopieren einer fotografischen Vorlage auf ein lichtempfindliches Kopiermaterial, das Folgendes umfasst:

ein Leuchtmittel (401) zum Abgeben von Kopierlicht für den Kopiervorgang,
eine Anzahl von optischen, lichtführenden Mitteln (404, 406, 110, 111, 112, 115, ,120, 122, 130, 140, 142, 151, 30) zum Führen des Kopierlichts entlang eines Strahlengangs vom Leuchtmittel über die fotografische Vorlage (200) zum Kopiermaterial (42) sowie zum Durchleuchten und zum Abbilden der durchleuchteten fotografischen Vorlage (200) auf das lichtempfindliche Kopiermaterial, und
einen lokalen Transmissionsmodulator (20),

durch den das Kopierlicht mittels der lichtführenden Mittel geführt wird, bevor es das Kopiermaterial belichtet und
dessen Transmission lokal zum Erzeugen eines Transmissionsprofils gemäß einer Transmissionsmatrix steuerbar ist,

**gekennzeichnet durch** eine Berechnungseinheit, die die Transmissionsmatrix aus einer Kombination einer gespeicherten Kompensationsmatrix und einer für den jeweiligen Kopiervorgang vorgegebenen Abbildungsmatrix berechnet, wobei die Kompensationsmatrix so bestimmt ist, dass sich bei einer spezifischen Vorlage und dieser zugeordneter spezifischer Abbildungsmatrix auf dem Kopiermaterial eine Abbildung mit einem angestrebten Helligkeitsprofil ergibt.

12. Kopiergerät nach Anspruch 11, dadurch gekennzeichnet, dass die Kompensationsmatrix gemäß dem Verfahren nach Anspruch 1 bis 10 so bestimmt wurde, dass sie die Verringerung oder Minimierung des Unterschieds gemäß Schritt c) bewirkt.

13. Verwendung eines lokalen Transmissionsmodulators in einem fotografischen Kopiergerät, bei welchem der lokale Transmissionsmodulator zur Manipulation des Helligkeitsprofils einer Kopie in Abhängigkeit von einer zu kopierenden, fotografischen Vorlage verwendbar ist, dadurch gekennzeichnet, dass der lokale Transmissionsmodulator außerdem zur Optimierung eines Profils des Kopierlichts derartig verwendet wird, dass sich, bei Fehlen der zu kopierenden fotografischen Vorlage im Strahlengang, in der Abbildungsebene ein angestrebtes Kopierlichtprofil ergibt oder ergeben würde.

14. Verwendung nach Anspruch 13, dadurch gekennzeichnet, dass die Verwendung des lokalen Transmissionsmodulators zur Kopierlichtänderung nach dem Verfahren nach einem der Ansprüche 1 bis 10 durchgeführt wird.

**Fig. 1a**

**Fig. 1b**

Fig. 2